**Europäisches Patentamt**

**European Patent Office**

**Office européen des brevets**

(19)

(11) Veröffentlichungsnummer: **0 250 837 B1**

# EUROPÄISCHE PATENTSCHRIFT

(12)

(45) Veröffentlichungstag der Patentschrift: 25.09.91

(51) Int. Cl.5: **B62D 5/24**, B62D 5/087

(21) Anmeldenummer: 87107399.5

(22) Anmeldetag: 21.05.87

(54) Servosteuerung, insbesondere Servolenkung für Kraftfahrzeuge.

(30) Priorität: 25.06.86 DE 3621294

(43) Veröffentlichungstag der Anmeldung:
07.01.88 Patentblatt 88/01

(45) Bekanntmachung des Hinweises auf die
Patenterteilung:
25.09.91 Patentblatt 91/39

(84) Benannte Vertragsstaaten:
DE ES FR GB IT SE

(56) Entgegenhaltungen:
DE-A- 2 242 611
DE-A- 3 218 844
DE-A- 3 514 325
DE-B- 1 093 224
DE-B- 1 166 636

(73) Patentinhaber: Daimler-Benz Aktiengesellschaft
Postfach 600202 Mercedesstrasse 136
W-7000 Stuttgart 60(DE)

(72) Erfinder: Dürr, Eugen
Müller-Thurgau-Weg 13
W-7307 Aichwald 2(DE)
Erfinder: Wörner, Günter
Falkenstrasse 15
W-7053 Kernen(DE)

Rank Xerox (UK) Business Services

## Beschreibung

Die Erfindung betrifft eine Servosteuerung der im Oberbegriff des Anspruches 1 angegebenen Art.

Bei einer aus der DE-AS 10 93 224 bekannten derartigen Servosteuerung, welche als Servolenkung für ein Kraftfahrzeug ausgebildet ist, sind an zwei relativ zueinander drehbaren gleichachsigen Wellenteilen axial voneinander beabstandete Flanschelemente angeordnet. Das eine Flanschelement ist undrehbar und axial unverschiebbar mit dem einen Wellenteil verbunden, während das andere Flanschelement am anderen Wellenteil undrehbar, jedoch axial verschiebbar gehaltert ist. Zwischen den Flanschelementen sind mit radialem Abstand von der Achse der Wellenteile Federstäbe angeordnet, deren Enden an den einander zugewandten Stirnseiten der Flanschelemente befestigt sind. Die Längsachsen der Federstangen sind tangential zu einer die Wellenteile umhüllenden Schraubenlinie ausgerichtet. Sobald also zwischen den Wellenteilen eine Relativdrehung auftritt, verändern die Federstangen ihre Steigung bezüglich der Wellenachse, so daß der axiale Abstand der Flanschelemente voneinander verändert wird.

Der Umfangsrand des verschiebbaren Flanschelementes greift in eine Nut eines parallel zu den Längsachsen der Wellenteile angeordneten Steuerschiebers eines Steuerventilaggregates mit stationärem Gehäuse. Dementsprechend führt der Steuerschieber den gleichen Hub wie das axial verschiebbare Flanschelement aus.

Wird die Lenkung durch Drehung des Lenkrades betätigt, so werden die Wellenteile eine vom Lenkwiderstand abhängige Relativdrehung gegen den Widerstand der Federstäbe ausführen, welche die Wellenteile in einer Normallage zueinander zu halten suchen. Die durch die Relativdrehung verursachte Verschiebung des verschiebbaren Flanschelementes betätigt den Steuerschieber des Servoventilaggregates, so daß ein davon gesteuerter Servomotor die jeweils gewünschte Lenkbetätigung mit vom Maß der Verschiebung des Steuerschiebers abhängiger Kraft unterstützt.

Eine prinzipiell ähnliche Servolenkung wird in der DE-AS 11 66 636 beschrieben. Hier sind zwischen einem am einen Wellenteil undrehbar und axial unverschiebbar angeordneten Flanschelement und einem mit dem anderen Wellenteil undrehbar, jedoch axial verschiebbar verbundenen Flanschelement als starre Elemente ausgebildete Lenker angeordnet, deren Enden jeweils an den flanschartigen Elementen gelenkig gehalten sind. Die Längsachsen dieser Lenker verlaufen wiederum tangential zu einer die Wellenteile umhüllenden Schraubenlinie. Dementsprechend wird bei Relativdrehung zwischen den Wellenteilen wiederum das verschiebbare Flanschelement in Achsrichtung der Wellenteile verschoben. Dieser Axialhub wird dann auf das Steuerventilaggregat der Servolenkung übertragen.

Bei den oben beschriebenen bekannten Konstruktionen führt das verschiebbare Flanschelement relativ geringe Hübe aus, wenn sich die beiden Wellenteile relativ zueinander drehen. Entsprechend den geringen Hüben des verschiebbaren Flanschelementes führt auch der Steuerschieber des Steuerventilaggregates relativ geringe Hübe aus. Dies hat aber zur Folge, daß die vom Steuerschieber gesteuerten Öffnungsquerschnitte des Steuerventilaggregates relativ gering bemessen sein müssen, wenn sich die Steuerquerschnitte bei Verschiebung des Steuerschiebers um einen größeren Faktor ändern sollen. Damit wird es aber erforderlich, daß das Fluid-System der Servosteuerung mit höherem Druck arbeiten muß, um zu ermöglichen, daß die Steuerquerschnitte von größeren Fluid-Mengen durchströmt werden können.

Deshalb ist es Aufgabe der Erfindung, eine Servosteuerung bzw. Servolenkung zu schaffen, welche bei relativ geringem konstruktiven Aufwand und vergleichsweise kleinen Abmessungen große Steuerhübe und damit große Steuerquerschnitte sowie geringe Leistungsanforderungen ermöglicht.

Diese Aufgabe wird bei einer Servosteuerung bzw. -lenkung der eingangs angegebenen Art durch die im Kennzeichen des Anspruches 1 angegebenen Merkmale gelöst.

Die Erfindung beruht auf der allgemeinen Erkenntnis, daß das axial verschiebbare Teil aufgrund seiner schraubverschiebbaren Anordnung auf dem einen Wellenteil bei Relativdrehungen zwischen den Wellenteilen und damit verbundener axialer Verschiebung des verschiebbaren Teiles eine zusätzliche Drehbewegung ausführt, welche ihrerseits eine Veränderung des Axialhubes bewirkt. Dabei wird das Maß des Axialhubes vergrößert, wenn die Verbindungsstange bzw. die Verbindungsstangen tangential zu einer die Wellenteile umhüllenden Schraubenlinie ausgerichtet sind, deren Steigung der Steigung der Schraubenlinie, welche die Schraubverschiebbarkeit wiedergibt, entgegengerichtet ist.

Gemäß einer bevorzugten Ausführungsform der Erfindung ist vorgesehen, daß jede die Gelenke der Verbindungsstangen durchsetzende Verbindungslinie in Achsansicht der Wellenteile tangential zur Wellenachse und in Draufsicht auf eine die Verbindungslinie enthaltende, achsparallele Ebene unter einem Winkel von etwa 45° zur Wellenachse geneigt verläuft, wenn die Wellenteile mittels des Federaggregates in ihrer relativen Mittellage gehalten werden, d.h. relativ zueinander weder nach rechts noch nach links verdreht sind. Aufgrund dieser Anordnung wird das Maß des Axialhubes des verschiebbaren Teiles allein durch den Betrag der Relativdrehung zwischen den Wellenteilen, nicht jedoch durch die Richtung der Relativdrehung bestimmt.

Weiterhin ist zweckmäßigerweise vorgesehen, am verschiebbaren Element eine Ring- bzw. Kreisscheibe mit zur Achse der Wellenteile konzentrischem Rand anzuordnen, welcher mit dem Steuerschieber oder einem damit verbundenen Teil zur Verstellung in Achsrichtung der Wellenteile formschlüssig verbunden ist, beispielsweise indem der Steuerschieber bzw. das damit verbundene Teil den Rand der Ring- bzw. Kreisscheibe auf deren beiden Seiten umgreifen.

Stattdessen ist es auch möglich, am verschiebbaren Element konzentrisch zur Achse der Wellenteile eine Ringnut anzuordnen, welche mit dem Steuerschieber oder einem damit verbundenen Teil in entsprechender Weise formschlüssig verbunden ist, etwa indem der Steuerschieber bzw. das damit verbundene Teil in die Ringnut eingreifen.

In beiden Fällen können also der Steuerschieber und das verschiebbare Element in einfachster Weise antriebsmäßig gekoppelt werden.

Im übrigen wird hinsichtlich bevorzugter Merkmale der Erfindung auf die Unteransprüche sowie die nachfolgende Beschreibung bevorzugter Ausführungsformen anhand der Zeichnung verwiesen. Darin zeigt

> Fig. 1 einen Längsschnitt einer erfindungsgemäßen Servolenkung längs einer Axialebene eines Eingangswellenteiles und einer gleichachsig dazu angeordneten Lenkschnecke und
>
> Fig. 2 eine schematisierte Ansicht des Eingangswellenteiles sowie der Lenkschnecke.

Die erfindungsgemäße Servolenkung besitzt ein Gehäuse 10 mit zwei darin drehbar gelagerten Wellenteilen 1 und 2. Das erste Wellenteil 1 ist als Eingangswellenteil angeordnet und mit einer nicht dargestellten Lenksäule bzw. einem Lenkrad verbunden. Das zweite Wellenteil 2 ist als Lenkschnecke ausgebildet, welche mit dem Eingangswellenteil 1 torsionselastisch gekuppelt ist. Dazu dient ein in einer Axialbohrung der Wellenteile 1 und 2 untergebrachter torsionselastischer Drehstab 11, dessen Enden jeweils mittels Stifte 12 mit den beiden Wellenteilen 1 und 2 drehfest verbunden sind. Dementsprechend lassen sich die Wellenteile 1 und 2 gegen die Federkraft des Drehstabes 11 relativ zueinander verdrehen. Dabei ist das Maß der möglichen Relativdrehung durch Zusammenwirken der einander zugewandten Enden 1′ und 2′ der Wellenteile 1 und 2 begrenzt. Das Ende 1′ des Wellenteiles 1 besitzt einen Umfang mit unrundem Querschnitt, während das Ende 2′ des Wellenteiles 2 eine stirnseitige, das Ende 1′ aufnehmende Ausnehmung mit ebenfalls unrundem Querschnitt besitzt, welcher dem Ende 1′ ein vorgegebenes Bewegungsspiel in Drehrichtung relativ zum Wellenteil 2 ermöglicht.

Bei Rotation des die Lenkschnecke bildenden zweiten Wellenteiles 2 verschiebt sich auf demselben ein Kolben 13, welcher im Gehäuse 10 verschiebbar geführt ist und mittels einer seitlichen Verzahnung 14 mit einem Zahnsegment 15 kämmt, welches seinerseits ein nicht dargestelltes Gestänge zur Steuerung der Fahrzeuglenkräder antreibt.

Der Kolben 13 trennt innerhalb des Gehäuses 10 zwei Kammern 16 und 17 voneinander ab, welche mit hydraulischem Medium gefüllt sind und mit unterschiedlichen Drucken beaufschlagt werden können, derart, daß die Verschiebung des Kolbens 13 hydraulisch unterstützt wird, wenn die Lenkschnecke bzw. das zweite Wellenteil 2 durch Drehung des Eingangswellenteiles 1 in Rotation versetzt wird. Der Kolben 13 sowie die Kammern 16 und 17 bilden einen im Gehäuse 10 untergebrachten Servomotor, welcher zur Erzeugung einer den Antrieb des Zahnsegmentes 15 in beiden möglichen Drehrichtungen unterstützenden Kraft dient, die ihrerseits mit dem Maß der Relativdrehung zwischen den Wellenteilen 1 und 2 gegenüber einer Mittellage der Wellenteile 1 und 2 relativ zueinander ansteigt bzw. abnimmt.

Um den Kolben 13 hydraulisch in der einen oder anderen Richtung beaufschlagen zu können, können die Kammern 16 und 17 mit der Druckleitung 18 einer nicht dargestellten Pumpe verbunden werden, wobei die Drucke in den Kammern 16 und 17 mittels eines Steuerventilaggregates 19 gesteuert bzw. verändert werden. Das Steuerventilaggregat 19 besitzt einen kolbenartigen Steuerschieber 4, welcher in weiter unten dargestellter Weise in Abhängigkeit von der zwischen den Wellenteilen 1 und 2 auftretenden Relativdrehung axial verschoben wird.

Der Steuerschieber 4 ist in einer Bohrung 20 des Gehäuses 10 verschiebbar angeordnet. Am Steuerschieber 4 sowie der Bohrung 20 sind als Umfangsnuten ausgebildete Aussparungen 21 und 22 bzw. 23 bis 25 angeordnet, und zwar derart, daß die zuerstgenannten Aussparungen 21 und 22 im Steuerschieber 4 in Axialrichtung desselben breiter sind als die zwischen den Aussparungen 23 bis 25 der Bohrung 20 verbleibenden Stege. Dementsprechend werden die durch die genannten Aussparungen gebildeten Ringräume miteinander durch Ringöffnungen verbunden, die ihrerseits durch Steuerkanten 26 bis 33 begrenzt werden.

Die durch die Aussparungen 21 und 22 gebildeten Ringräume sind über Leitungen 34 und 35 mit jeweils einer der Kammern 16 und 17 verbunden. Die durch die Aussparung 23 gebildete Ringkammer ist mit der Druckleitung 18 verbunden. Die von den Aussparungen 24 und 25 gebildeten Ringkammern sind über Leitungen 36 und 37 mit einem Reservoir 38 für das Hydraulikmedium verbunden.

In der dargestellten Mittellage des Steuerschiebers 4 fließt über die Druckleitung 18 in den Ringraum der Aussparung 24 zugeführtes hydraulisches Medium zwischen den Steuerkanten 28 sowie 29 bzw. 30 sowie 31 hindurch in die Ringkammern der Aussparungen 21 und 22, von wo das hydraulische Medium einerseits in die Leitungen 34 und 35 und damit in die Kammern 16 und 17 eintritt und andererseits zwischen den Steuerkanten 26 sowie 27 bzw. 32 sowie 33 hindurch in die Ringräume der Aussparungen 24 und 25 gelangt. Von dort fließt das hydraulische Medium durch die Leitungen 36 und 37 in das Reservoir 38 zurück.

In der dargestellten Mittellage des Steuerschiebers 4 stellt sich in den Kammern 16 und 17 ein gleicher Druck ein, weil auch die von den Aussparungen 21 und 22 gebildeten Ringkammern gleiche Drucke führen, denn die zwischen den Steuerkanten 28 sowie 29 und 30 sowie 31 verbleibenden Querschnitte haben gleiche Größe wie die freien Querschnitte zwischen den Steuerkanten 26 sowie 27 und 32 sowie 33. Verschiebt sich der Steuerschieber 4 beispielsweise nach links, so verengen sich die freien Spalte zwischen den Steuerkanten 28 sowie 29 und 32 sowie 33, während sich die Spalte zwischen den Steuerkanten 26 sowie 27 und 30 sowie 31 erweitern. Damit stellt sich in den von den Aussparungen 21 und 22 gebildeten Kammern ein unterschiedlicher Druck ein, wobei im Bereich der Aussparung 21 ein geringer Druck und im Bereich der Aussparung 22 ein hoher Druck erzielt werden, weil der Zufluß des hydraulischen Mediums zur Aussparung 21 gedrosselt und gleichzeitig der Abfluß des hydraulischen Mediums aus der Aussparung 21 entdrosselt werden, während im Falle der Aussparung 22 der Zufluß des Hydraulikmediums entdrosselt und der Abfluß desselben gedrosselt werden. Im Extremfall wird der Zufluß zur Aussparung 21 zwischen den Steuerkanten 28 und 29 vollständig abgesperrt, während im Falle der Aussparung 22 der Zufluß vollständig geöffnet und der Abfluß zwischen den Steuerkanten 32 und 33 vollständig geschlossen werden.

Die unterschiedlichen Drucke in den von den Aussparungen 21 und 22 gebildeten Ringkammern stellen sich über die Leitungen 34 und 35 auch in den Kammern 16 und 17 ein, so daß der Kolben 13 bei Verschiebung des Steuerschiebers 4 nach links ebenfalls nach links verschoben wird, wobei die erzeugte Stellkraft vom Maß der Verschiebung des Steuerschiebers 4 abhängt.

Falls der Steuerschieber 4 nach rechts verschoben wird, stellt sich in den Kammern 16 und 17 ein Druckgefälle in umgekehrter Richtung ein, so daß sich der Kolben 13 nach rechts mit einer Stellkraft zu schieben sucht, die wiederum von dem Maß der Verschiebung des Steuerschiebers 4 abhängt.

Zur Verschiebung des Steuerschiebers 4 in Abhängigkeit von der Relativdrehung zwischen den Wellenteilen 1 und 2 dient ein hülsenartiges verschiebbares Element 3, welches auf dem Eingangswellenteil 1 undrehbar, jedoch axial verschiebbar angeordnet ist. Die Undrehbarkeit wird mittels eines am Wellenteil 1 angeordneten Paßstiftes 39 gewährleistet, welcher in einen Axialschlitz des verschiebbaren Elementes 3 hineinragt und gegenüber den Wandungen des Schlitzes mittels eines Rollenlagers od.dgl. reibungsvermindernd abgestützt sein kann.

Das verschiebbare Element 3 wird durch an seinen beiden Stirnenden angeordnete Federn 40 in eine Mittellage gedrängt. Die genannten Federn 40 stützen sich jeweils mit einem Ende am verschiebbaren Element 3 und mit dem anderen Ende an einer Umfangsringstufe des Wellenteiles 1 bzw. einer dort angeordneten Ringscheibe 41 ab.

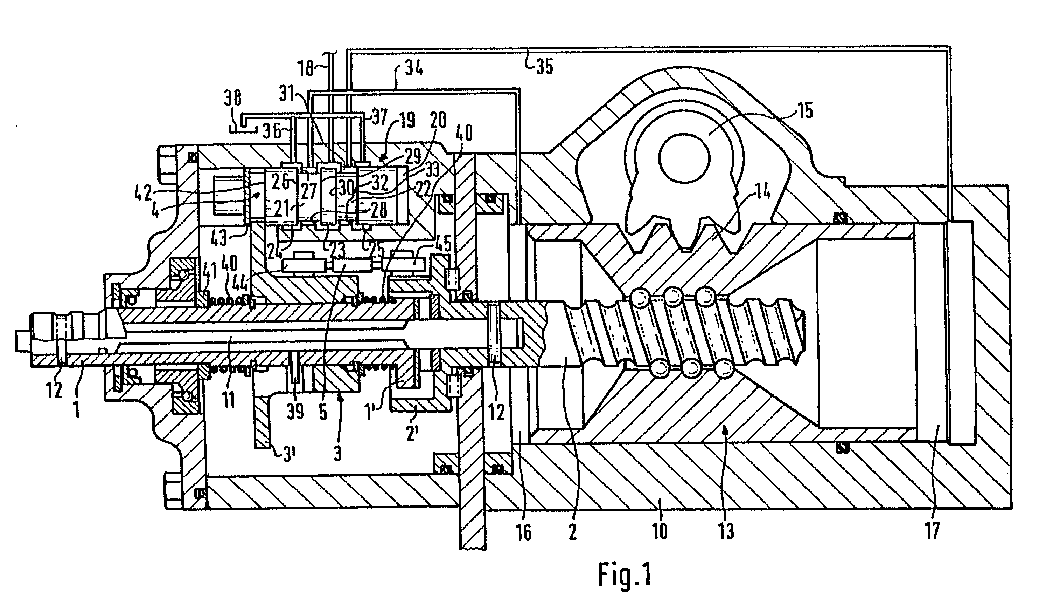

Am verschiebbaren Element 3 ist eine Kreisscheibe 3' angeordnet, welche mit ihrem Umfangsrand bis zum Steuerschieber 4 erstreckt ist, welcher den Scheibenrand auf beiden Stirnseiten etwas überlappt. Dazu dient einerseits eine Ringstufe 42 am Steuerschieber sowie andererseits eine auf dem Steuerschieber 4 mittels Seeger-Ring festgelegte Ringscheibe 43. Ringstufe 42 und Ringscheibe 43 überlappen die Scheibe 3 etwas in der aus Fig. 1 ersichtlichen Weise. Dementsprechend können der Steuerschieber 4 und das verschiebbare Element 3 nur gemeinsam in Achsrichtung der Wellenteile 1 und 2 verschoben werden.

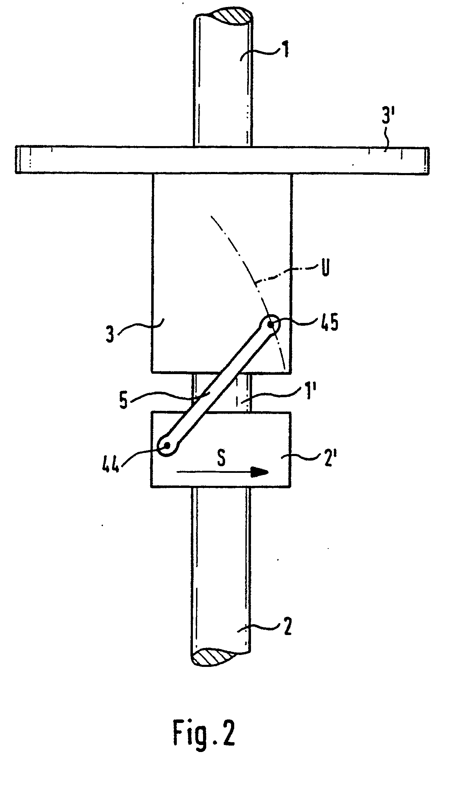

Wie insbesondere aus Fig. 2 ersichtlich ist, ist das verschiebbare Element 3 mit dem benachbarten Ende 2' des Wellenteiles 2 bzw. der Lenkschnecke mittels einer Verbindungsstange 5 gekoppelt, die mit Gelenken 44 und 45 am verschiebbaren Element 3 bzw. dem Ende 2' angelenkt ist. Die Längsachse der Verbindungsstange 5 ist relativ zur Längsachse der Wellenteile 1 und 2 geneigt, derart, daß die Längsachse bzw. die Verbindungslinie zwischen den Gelenken 44 und 45 eine Tangente zu einer die Längsachse der Wellenteile 1 und 2 konzentrisch umhüllenden Schraubenlinie bilden.

Vorzugsweise ist die Neigung der Verbindungsstange derart bemessen, daß die Verbindungslinie der Gelenke 44 und 45 in der Ansicht der Fig. 2 mit der Längsachse der Wellenteile 1 und 2 einen Winkel von etwa 45° bildet.

Die Anordnung arbeitet in der folgenden Weise:

Wird das Eingangswellenteil 1 durch Betätigung des nicht dargestellten Lenkrades des Fahrzeuges verdreht, so dreht sich auch die Lenkschnecke bzw. das Wellenteil 2 in entsprechendem Drehsinne. Jedoch tritt dabei zwischen den Wellenteilen 1 und 2 entsprechend dem jeweils zu überwindenden Lenkwiderstand eine Relativdrehung auf, bei der der Drehstab 11 elastisch tordiert wird. Durch ein zwischen den Enden 1' und 2' der Wellenteile 1 und 2 angeordnetes Axiallager ist gewährleistet, daß die Wellenteile 1 und 2 ihren axialen Abstand bei Relativdrehungen unverändert beibehalten.

Aufgrund der Relativdrehung zwischen den Wellenteilen 1 und 2 bewirkt nun die Verbindungsstange 5 eine axiale Verschiebung des relativ zum Wellenteil 1 undrehbaren verschiebbaren Elementes 3. Wenn sich beispielsweise die Lenkschnecke bzw. das Wellenteil 2 gegenüber dem Wellenteil 1 in Fig. 2 in Pfeilrichtung S dreht, so wird das verschiebbare Element 3 nach oben verschoben. Bei umgekehrter Relativrichtung erfolgt eine Abwärtsverschiebung des Elementes 3.

Die Besonderheit der Erfindung liegt darin, daß das verschiebbare Element 3 auf dem Wellenteil 1 schraubverschiebbar angeordnet ist, wobei die den schraublinienförmigen Verschiebeweg verlängernde Schraubenlinie entgegengesetzte Steigung zu der Schraubenlinie aufweisen soll, zu der die Verbindungslinie zwischen den Gelenken 44 und 45 der Verbindungsstange 5 eine Tangente bildet. Ein Beispiel für einen entsprechenden schraublinienförmigen Verschiebeweg ist in Fig. 2 punktiert dargestellt und mit U bezeichnet. Bei richtiger Bemessung der Steigung des schraublinienförmigen Verschiebeweges U - die Steigung dieser Schraubenlinie soll zur Steigung der Verbindungslinie zwischen den Gelenken 44 und 45 entgegengesetzt, jedoch mit ungleicher Größe bemessen sein - kann erreicht werden, daß das verschiebbare Element 3 bei Relativdrehungen zwischen den Wellenteilen 1 und 2 einen besonders großen Axialhub ausführt.

**Patentansprüche**

1. Servosteuerung, insbesondere Servolenkung für Kraftfahrzeuge, mit einem handhabenseitigen bzw. lenkradseitigen Wellenteil (1), einem dazu gleichachsigen steuergetriebe- bzw. lenkgetriebeseitigen Wellenteil (2), einem die Wellenteile elastisch kuppelnden Federaggregat (11) sowie einem zwischen die Wellenteile (1,2) geschalteten Getriebeaggregat (2,2',3,5) zur Verstellung eines mit stationärem Gehäuse (10) angeordneten Steuerschiebers (4) eines Servoventilaggregates (19), welcher mittels des Getriebeaggregates (2,2',3,5) bei Relativdrehungen zwischen den Wellenteilen (1,2) in Abhängigkeit von dem Maß der Relativdrehung mehr oder weniger weit sowie drehrichtungsabhängig in der einen oder anderen Richtung aus einer Mittellage ausgelenkt wird und damit einen vom Servoventilaggregat (19) gesteuerten Servomotor (13,16,17), welcher antriebsmäßig mit dem Steuer- bzw. Lenkgetriebe (15) verbunden ist, im Sinne einer Vorwärts- oder Rückwärtsbewegung mit vom Maß der Verschiebung des Steuerschiebers (4) abhängiger Stellkraft mit einer Druckquelle (18) verbindet, wobei als Teil des Getriebeaggregates (2,2',3,5) auf dem einen Wellenteil ein durch die Relativdrehung zwischen den Wellenteilen (1,2) axial verschiebbares Element (3) angeordnet und mit dem Steuerschieber (4) antriebsmäßig gekoppelt ist, indem das auf dem einen Wellenteil (1) axial verschiebbare Teil (3) mit dem anderen Wellenteil (2) mittels mindestens einer Verbindungsstange (5) od.dgl. gekoppelt ist, deren eines Ende am axial verschiebbaren Teil (3) und deren anderes Ende mit radialem Abstand von der Wellenachse am anderen Wellenteil (2) bzw. einem damit drehfest verbundenen Element (2') angelenkt ist, derart, daß die Projektion der Verbindungslinie zwischen den Gelenken (44,45) auf eine Axialebene der Wellenteile (1,2) einen Winkel zur Wellenachse bildet,
dadurch gekennzeichnet,
daß das verschiebbare Teil (3) auf dem einen Wellenteil (1) schraubverschiebbar angeordnet ist, derart, daß der Axialhub des verschiebbaren Teiles (3) bei Relativdrehung zwischen den Wellenteilen (1,2) erhöht wird.

2. Servosteuerung nach Anspruch 1, dadurch gekennzeichnet, daß die Verbindungslinie in Achsansicht der Wellenteile (1,2) tangential zur Wellenachse und in Draufsicht auf eine die Verbindungslinie enthaltende, achsparallele Ebene unter einem Winkel von etwa 45° zur Wellenachse geneigt verläuft.

3. Servosteuerung nach einem der Ansprüche 1 oder 2, dadurch gekennzeichnet, daß am verschiebbaren Element (3) eine Ring- bzw. Kreisscheibe (3') mit zur Achse der Wellenteile (1,2) konzentrischem Rand angeordnet ist, welcher mit dem Steuerschieber (4) oder einem damit verbundenen Teil zur Verstellung in Achsrichtung der Wellenteile (1,2) formschlüssig verbunden ist.

4. Servosteuerung nach Anspruch 3, dadurch gekennzeichnet, daß der Steuerschieber (4) bzw. das damit verbundene Teil den Rand der Ring- bzw. Kreisscheibe (3') auf deren beiden Stirnseiten umgreifen.

5. Servosteuerung nach einem der Ansprüche 1 oder 2, dadurch gekennzeichnet, daß am verschiebbaren Element (3) konzentrisch zur Achse der Wellenteile (1,2) eine Ringnut angeordnet ist, welche mit dem Steuerschieber (4) oder einem damit verbundenen Teil zur Verstellung in Achsrichtung der Wellenteile (1,2) formschlüssig verbunden ist.

6.  Servosteuerung nach Anspruch 5, dadurch gekennzeichnet, daß der Steuerschieber (4) bzw. das damit verbundene Teil in die Ringnut eingreifen.

## Claims

1.  A servocontrol arrangement, particularly servo-assisted steering for motor vehicles, with a shaft part (1) at the operating or steering wheel end, equiaxially therewith a shaft part (2) at the control mechanism or steering gear end, a spring assembly (11) which flexibly couples the shaft parts and, incorporated between the shaft parts (1, 2) a gear assembly (2, 2', 3, 5) for displacement of a control slide valve (4) disposed with a stationary housing (10) and forming part of a servovalve assembly (19) which is deflected in one direction or the other from a midway position by means of the gear mechanism (2, 2', 3, 5) upon relative rotation between the shaft parts (1, 2) and as a function of the amount of relative rotation and to a greater or lesser degree and also dependent upon the direction of rotation so that a servomotor (13, 16, 17) which is controlled by the servovalve assembly (19) and which on the drive side is connected to the control or steering mechanism (15), is in order to produce a forwards or reverse movement connected to a pressure source (18) with a postitioning force dependent upon the amount of displacement of the control slide valve (4), a part of the gear mechanism (2, 2', 3, 5) on one shaft part, an element (3) is disposed which is axially displaceable by the relative rotation between the shaft parts (1, 2) being coupled for drive to the control slide valve (4) in that the part (3) which is axially displaceable on one shaft part (1) is coupled to the other shaft part (2) by means of at least one connecting rod (5) or the like, one end of which is articulated on the axially displaceable part (3) while its other end is articulated on and is at a radial distance from the shaft axis on the other shaft part (2) or an element (2') which is rotationally rigidly connected thereto so that the projection of the connecting line between the joints (44, 45) on an axial plane of the shaft parts (1, 2) forms an angle to the shaft axis, characterized in that the displaceable part (3) is disposed for a screwing displacement on one shaft part (1) so that the axial travel of the displaceable part (3) is increased upon a relative rotation between the shaft parts (1, 2).

2.  A servocontrol arrangement according to claim 1, characterized in that the connecting line, in the axial view of the shaft parts (1, 2) extends tangentially to the shaft axis and in plan view extends at an angle of about 45° to the shaft axis on an axially parallel plane containing the connecting line.

3.  A servocontrol arrangement according to one of claims 1 or 2, characterized in that there is on the displaceable element (3) an annular or circular disc (3') with a rim concentric with the axis of the shaft parts (1, 2) and which is form-lockingly connected to the control slide valve (4) or to a part connected thereto for adjustment of the shaft parts (1, 2) in an axial direction.

4.  A servocontrol arrangement according to claim 3, characterized in that the control slide valve (4) or the part connected thereto engage around both sides of the rim of the annular or circular disc (3').

5.  A servocontrol arrangement according to one of claims 1 or 2, characterized in that there is on the displaceable element (3) concentrically with the axis of the shaft parts (1, 2) an annular groove which is form-lockingly connected to the control slide valve (4) or to a part connected thereto for adjustment of the shaft parts (1, 2) in an axial direction.

6.  A servocontrol arrangement according to claim 5, characterised in that the control slide valve (4) or the part connected thereto engage the annular groove.

## Revendications

1.  Mécanisme assisté, notamment direction assistée pour véhicules automobiles, comportant une partie d'arbre (1) située du côté de manoeuvre ou du côté du volant, une partie d'arbre (2) coaxiale à la première partie d'arbre et située du côté transmission de commande ou du côté transmission de direction, un composant formant ressort (11) accouplant élastiquement les parties d'arbre ainsi qu'un composant de transmission (2, 2', 3, 5) monté entre les parties d'arbre (1, 2) pour l'actionnement d'un tiroir de distribution (4) disposé dans le corps stationnaire (10) d'un servodistributeur (19) et qui est écarté d'une position centrale dans l'un ou l'autre sens, au moyen du composant de transmission (2, 2', 3, 5), lors de rotations relatives entre les parties d'arbre (1, 2), plus ou moins loin en fonction de l'amplitude de la rotation relative et également en fonction du sens de rotation, de manière à assurer ainsi la liaison d'une source de pression (18) avec un servomoteur (13, 16, 17 ), commandé par le servodistributeur (19) et qui est accouplé pour entraînement avec la transmission de commande ou de direction (15), dans le sens d'un mouvement d'avancement ou de recul avec une force de manoeuvre qui est fonction de la distance de translation du tiroir de distribution (4), une partie du composant de transmission (2, 2', 4, 5), qui est disposé sur une des parties d'arbre, étant constituée par un élément (3) déplaçable axialement en translation sous l'effet de la rotation relative entre les parties d'arbre (1, 2) et accouplé pour entraînement avec le tiroir de distribution (4) du fait que cet élément (3), déplaçable axialement en translation sur une des parties d'arbre (1), est accouplée avec l'autre .partie d'arbre (2) au moyen d'au moins une tige de liaison (5) ou analogue, dont une extrémité est articulée sur l'élément (3) mobile axialement en translation et dont l'autre extrémité est articulée, en étant espacée radialement de l'axe de l'arbre, sur l'autre partie d'arbre (2) ou bien sur un élément (2') relié à celle-ci sans possibilité de rotation relative, de telle sorte que la projection de la droite de jonction entre les articulations (44, 45) sur un plan axial des parties d'arbre (1, 2) fasse un certain angle avec l'axe de l'arbre, caractérisé en ce que l'élément (3) mobile en translation est disposé sur une des parties d'arbre (1) avec possibilité de vissage de telle sorte que la course axiale de l'élément (3) mobile en translation soit augmentée lors d'une rotation relative entre les parties d'arbre (1, 2).

2. Direction assistée selon la revendication 1, caractérisée en ce que la droite de jonction est orientée, dans une vue en élévation axiale des parties d'arbre (1, 2), tangentiellement à l'axe de l'arbre et, dans une vue faite en projection sur un plan parallèle à l'axe et contenant la droite de jonction, est inclinée d'un angle d'environ 45° par rapport à l'axe de l'arbre.

3. Direction assistée selon une des revendications 1 ou 2, caractérisée en ce qu'il est prévu sur l'élément (3) mobile en translation un disque annulaire ou circulaire (3') comportant un bord concentrique à l'axe des parties d'arbre (1, 2) et qui est relié par conjugaison de forme avec le tiroir de distribution (4), ou bien avec une partie reliée à celui-ci, pour un déplacement dans la direction axiale des parties d'arbre (1, 2).

4. Direction assistée selon la revendication 3, caractérisée en ce que le tiroir de distribution (4), ou bien la partie reliée à celui-ci, entoure le bord du disque annulaire ou circulaire (3') sur ses deux côtés frontaux.

5. Direction assistée selon une des revendications 1 ou 2, caractérisée en ce qu'il est prévu sur l'élément (3) mobile en translation, concentriquement à l'axe des parties d'arbre (1, 2), une rainure annulaire qui est reliée par conjugaison de forme avec le tiroir de distribution (4), ou bien avec une partie reliée à celui-ci, pour un déplacement dans la direction axiale des parties d'arbre (1, 2).

6. Direction assistée selon la revendication 5, caractérisée en ce que le tiroir de distribution (4), ou bien la partie reliée à celui-ci, est engagé dans la rainure annulaire.

Fig.1

EP 0 250 837 B1

Fig.2